# EUROPEAN PATENT APPLICATION

(11) **EP 2 523 145 A1**
(43) Date of publication of application: **14.11.2012**
(21) Application number: 11305570.1
(22) Date of filing: 11.05.2011
(51) Int. Cl.: G06K 9/22, H04N 21/2343, H04N 21/234, H04N 21/845, H04N 21/24

(54) **Method for dynamically adapting video image parameters for facilitating subsequent applications**

(71) Applicant: Alcatel Lucent, 75007 Paris (FR)
(72) Inventor: Delegue, Gérard, 94230 Cachan (FR); Nouri, Marwen, 91400 Saclay (FR)
(74) Representative: ALU Antw Patent Attorneys

(57) **Abstract**

A method for adapting an input video stream (V) for facilitating a subsequent application to be performed upon receipt of the adapted video stream by a receiver comprises the steps of determining control parameters (AVP) from quality requirement parameters (QR), bandwidth limitation parameters (BW) and spatial parameters(x,y), a step of performing a spatial-temporal adaptation of said input video stream (V) in accordance with said control parameters (AVP) to thereby generate said adapted video stream (AV) for provision to said receiver.

## Description

The present invention relates to a method for dynamically adapting video image parameters for facilitating subsequent applications upon receipt of the adapted video stream by a receiver.

For a mobile terminal, such as a mobile phone, the quality of video transmissions in real time is limited by the available bandwidth of the network. For applications which rely on analysis of a video frame in real-time such as e.g. object recognition or telemedicine applications wherein e.g. urgent advice is requested from a specialist while only a simple mobile phone is available at the place of an accident for making a video, video frames transmitted and/or received by mobile phones will lead to poor recognition results because of the inherent low quality of these video images. Face recognition applications indeed require very sharp images of the face region with sufficient resolution. Similarly a medical specialist may need sharp images of e.g. a wound for forming his/her opinion and corresponding advice for urgent treatment.

In case of automated image recognition applications such applications further also require a lot of processing power, which is not always available in a mobile phone at a receiver end. Furthermore huge database memory may be required, e.g. for storing features of already recognized objects. This amount of memory is also not available in ordinary mobile phones.

As a result of all these difficulties, at present it is not possible to perform applications such as real-time object recognition/interpretation, either automatically, or by a human, on video images received or generated by a mobile phone terminal.

It is therefore an object of embodiments of the present invention to provide a solution for the aforementioned problems.

According to embodiments of the present invention this object is achieved by the provision of a method for adapting an input video stream for facilitating a subsequent application to be performed upon receipt of the adapted video stream by a receiver, said method comprising the steps of determining control parameters from quality requirement parameters, bandwidth limitation parameters and spatial parameters, a step of performing a spatial-temporal adaptation of said input video stream in accordance with said control parameters to thereby generate said adapted video stream for provision to said receiver.

The combination of quality requirement parameters, which are parameters determining a minimum level which is required for executing a certain application such as object recognition on the modified or adapted video, after transmission over the communications network, bandwidth limitation parameters which represent inherent transmission limitations of the modified video during transmission over the communications network, with spatial parameters, indicating the region of interest in a picture of a video sequence which needs to undergo this specific application of recognition, will result in a set of optimized control parameters which are to be used for adapting the input video stream. This adaptation can be a spatial adaptation, meaning that some regions of different images will be adapted, while others not, or a temporal adaptation, meaning that some frames or parts of them can be e.g. omitted from the video, while others not, or a combination of both.

In a first embodiment said spatial-temporal adaptation is performed by decreasing the resolution of the areas of the images which are not relevant with respect to said application , with respect to these areas of the images on which are relevant to said application.

This may be helpful e.g. in case a doctor has to analyze the injuries of a patient, from a video transmitted over a mobile network. In case a high quality video is generated which is subsequently adapted such as e.g. to only keep a high resolution in the areas related to e.g. the patient's injury, for being transmitted over a bandwidth limited network to a receiver of this distant specialist, with the other parts of the image becoming blurred during the process of adaptation, thereby enabling the transmission over the adapted video over this bandwidth reduced network, the received video images will still be sufficient for enabling this distant service such as object recognition and/or object interpretation on this adapted video.

In another embodiment said spatial-temporal adaptation is performed by decreasing the frame rate of parts of images which are not relevant with respect to said application, with respect to these parts of the images which are relevant with respect to said application.

This can be interesting in case e.g. a moving object is to be recognized from a video stream. By only focusing at, and thus withholding these frames in which the moving object is situated, while withdrawing some or parts of the other frames, thereby decreasing the frame rate at these parts, the video can be adapted to preserve the high quality in the regions relevant for the object to be recognized. At the same time the quality for these regions which are not of interest, will be lowered while being compliant to bandwidth restrictions of the communications network which need to transport the adapted video.

The present invention relates as well to embodiments of a video adaptation device for adapting an input video stream, said video adaptation device being adapted to determine control parameters for being used when performing a spatial-temporal adaptation of said input video stream to thereby generate an adapted video stream, said video adaptation device being further adapted to calculate said control parameters from quality requirement parameters, bandwidth limitation parameters and spatial parameters being provided to said video adaptation device.

In a first embodiment this video adaptation device is further adapted to perform said spatial-temporal adaptation by decreasing the resolution of areas of images of said video stream outside the regions defined by said spatial parameters.

In another embodiment the video adaptation device is further adapted to perform said spatial-temporal adaptation by decreasing the frame rate of parts of images of said video stream outside the regions defined by said spatial parameters.

In another embodiment the video adaptation device is also adapted to perform an object detection operation on said input video stream, thereby generating detected object features.

Such a coarse object detection, which requires much less resources compared to a real object recognition, can be helpful for e.g. identifying the spatial parameters related to the objects to be further recognized. This object detection can also be used when determining further metadata, which can be further transmitted together with the adapted video stream, such as to facilitate the future object recognition, or to already provide some information with respect to the identified object, to the receiver.

The present invention relates as well to embodiments of a terminal comprising such a video adaptation device, an encoder for encoding the adapted video stream, thereby providing an encoded adapted video stream, and means for further transmitting said encoded adapted video stream towards a receiver device via a communications network.

Such a terminal can be a mobile or a fixed terminal. With respect to the present restrictions in bandwidth of traditional mobile communications networks such as the GSM network, mobile terminals can benefit a lot from the presence of such a video adaptation device. However also in fixed networks with reduced bandwidths such as local networks shared by many users, the presence of such a video adaptation device in a fixed terminal, can enable applications such as object recognition which were previously not possible under these circumstances.

In another embodiment the terminal further comprises video descriptor means coupled to said video adaptation device and being adapted to generate metadata from said detected object features for provision to an encapsulation device of said terminal, said encapsulation device being adapted to generate enhanced encoded adapted video packets from said encoded adapted video stream and said metadata for provision to said receiver device.

The present invention relates as well to embodiments of a receiver device communicatively coupled to a terminal in accordance with any of the previous claims, said receiver device comprising a decoder for decoding said encoded adapted video stream to thereby providing said adapted video stream.

In an embodiment the receiver device may further comprise a video object recognition module adapted to perform object recognition on said adapted video stream.

In yet another embodiment the receiver device is part of an application server of a communications network, which application server can itself comprise means for storing requirement parameters for said video object recognition module, and for providing said requirement parameters as said quality requirement parameters to said video adaptation device of said terminal.

The present invention also relates to embodiments of an application server of a communications network, said application server being communicatively coupled to a terminal as described above, and comprising a decoder for decoding said encoded adapted video stream for provision to an application service module of said application server, said application service module being adapted to perform an application on said adapted video stream , and means for storing requirement parameters for said application service module and for providing said requirement parameters as said quality requirement parameters to said video adaptation device of said terminal.

In an embodiment the application service module comprises a video object recognition module adapted to perform object recognition on said adapted video stream .

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Figs 1a-d schematically show high level embodiments of a first terminal MT1/MT1' cooperatively coupled to an embodiment of an application server, adapted to perform steps of different embodiments of the method,
Figs. 2a-c show high level embodiments of the method,
Fig. 3 shows a more detailed implementation of step 500 of Figs. 2a-c, for calculating adapted video parameters,
Fig. 4 shows a more detailed implementation of steps 600 and 700 combined of Figs. 2a-c, for performing the spatio-temporal adaptation and encoding of the video .
Figs. 5a-b schematically shows other high level embodiments of a first terminal MT1 for performing other embodiments of the method.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

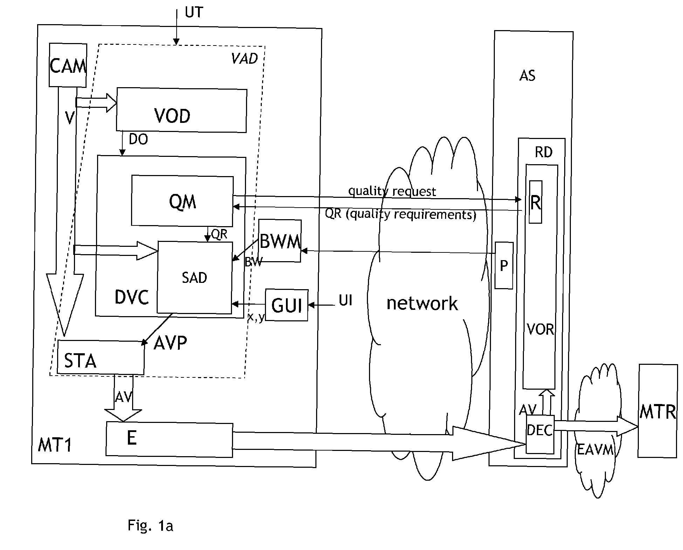

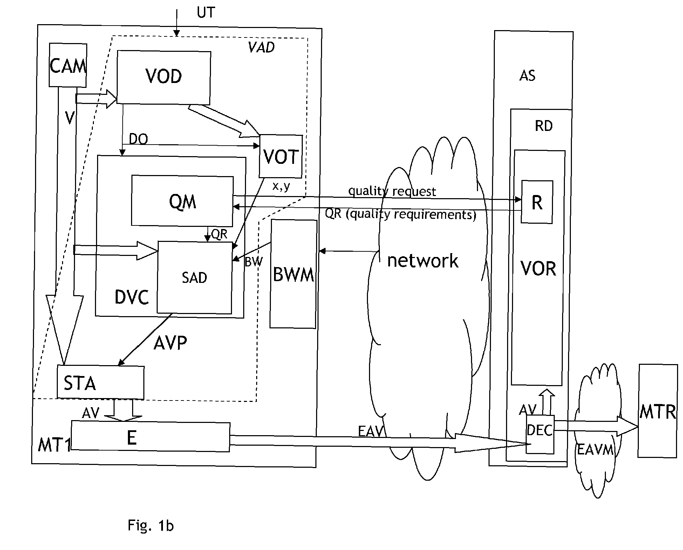

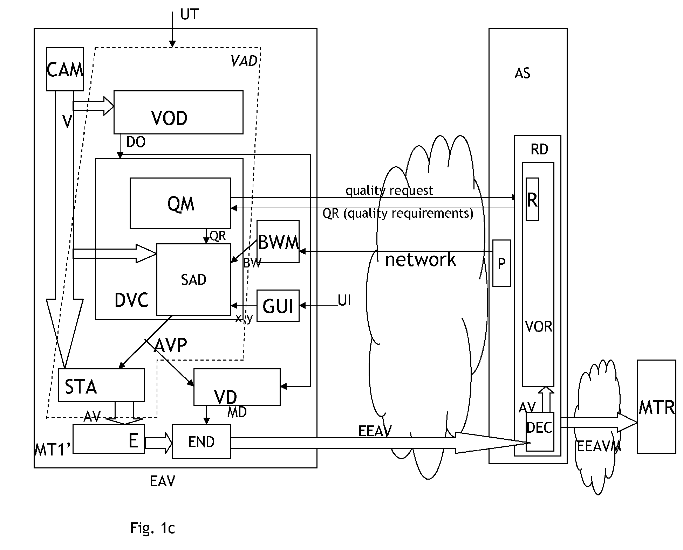

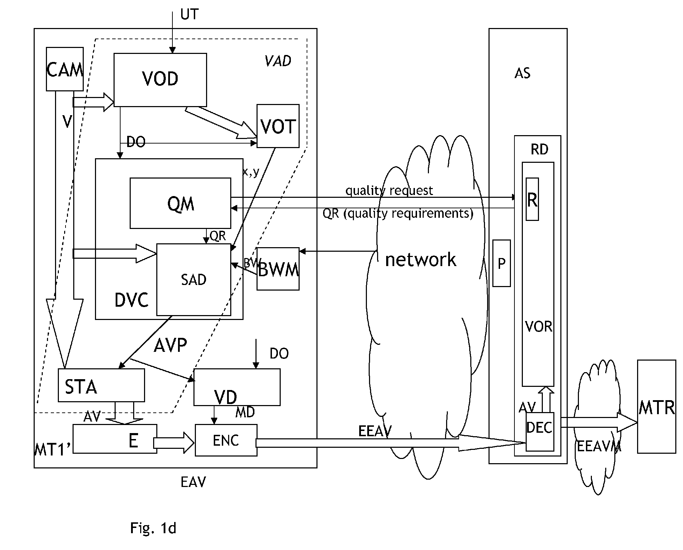

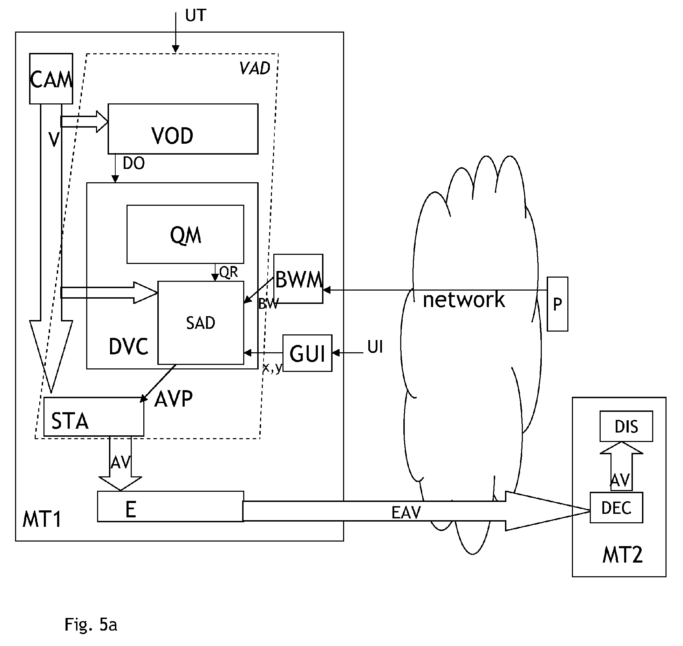

Fig. 1 a shows a schematic of a first embodiment of a first terminal MT1, which can preferably, but not necessarily be, a mobile terminal such as a mobile phone, a laptop, a PDA, a gaming device, a tablet PC, etc.. In the embodiment depicted in Figs. 1 a this first terminal is adapted to cooperatively operate with an application server AS in the network, with the aim of enabling a service or an application such as e.g. automatic object recognition on video images generated or received by this mobile terminal. However in the embodiments depicted in Figs. 5a-b, the first terminal MT1 does not cooperatively operate with an application server in the network, and can be used as a stand-alone device for performing other embodiments of the method. This can be used e.g. for telemedicine applications where a video is recorded on the first terminal, which video is subsequently adapted, encoded and transmitted towards another terminal of e.g. a physician, which person can do the object recognition him-or herself on the received and decoded adapted videos.

In all embodiments the terminal MT1 comprises a video adaptation device VAD for adapting video image parameters of an input video stream, as well as for performing the adaptation of the input video bitstream V itself in accordance with these parameters. VAD, denoted by the dashed line in figs. 1a-d is adapted to receive an unencoded input video bitstream V e.g. generated by a camera CAM of the mobile terminal MT1, and to provide an adapted video bitstream AV, as will be further explained in the next paragraphs.

The following embodiments will be described for enabling applications of object recognition. It is however clear that other embodiments can be envisaged for performing other applications. A skilled person is adapted to envisage embodiments for such other applications, based on the teachings presented in this document for such other applications.

In most embodiments the VAD can be user-activated by means of a trigger signal UT, which can be either user generated, e.g. via a soft or hard user input, or which can also be application generated in case a user subscribes to a service of e.g. object recognition or telemedicine. In the embodiment of Fig. 1 a VAD further comprises a video object detector VOD module, adapted to already detect specific objects or events in incoming video frames. VOD therefore is adapted to receive this video input bitstream V , depicted by the thick white arrow. As previously mentioned in this document, this input video stream can itself be generated by a camera CAM of the terminal itself, but in other embodiments however this video input bitstream can be a decoded bitstream which is received from another user, e.g. by means of an MMS or other transmission. VOD is further adapted to analyze one or more frames of this input video bitstream for detecting a desired object or event. As object detection operations require less processing resources compared to object recognition, such a VOD module can easily be incorporated within a mobile phone, e.g. as part of the central processor. It can e.g. detect a face, a building, objects,...or alternatively events by analyzing scene modifications in successive frames etc.

The output of the video object detector VOD is a series of roughly recognized objects or events such as e.g. a "face" , a "car" , a "football match" . This output is depicted on Fig. 1 as "DO". This output data DO generally comprise metadata that describe the object and/or its position in the frames.

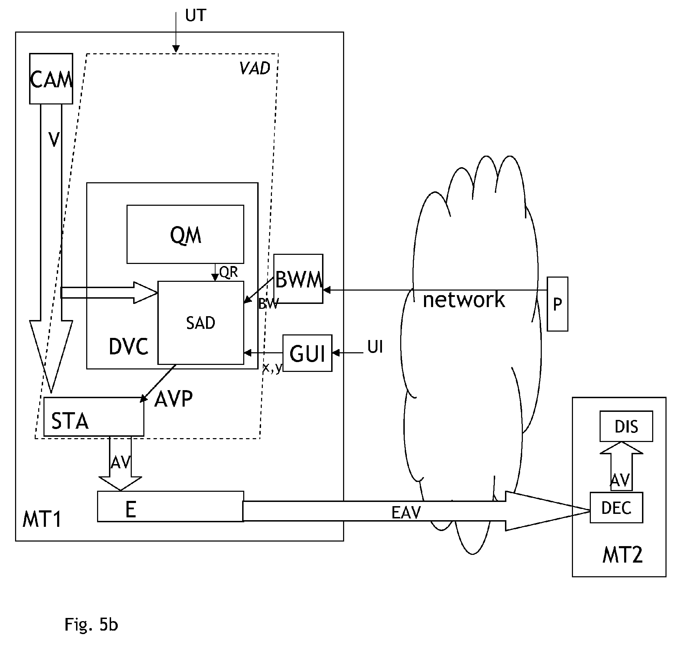

It is to be remarked that other embodiments of a video adaptation device exist which do not comprise such a video object detection module. This will be shown e.g. when describing Fig. 5b.

The information DO is provided to another module of the video adaptation device ,denoted dynamic video controller DVC. In the embodiment depicted in Figs. 1a-d, this dynamic video controller is adapted to retrieve information with respect to the requested service, in this case being object recognition. To this purpose the dynamic video controller is adapted to retrieve the parameters reflecting a minimum level of video quality as required by the application, in the example of Figs 1a-d being an object recognition module VOR residing on an application server AS. This retrieval can be done by a request from DVC to the application server AS, as shown on the figure 1 a by the signal "quality request" . In Fig. 1a this signal is generated and transmitted by a quality manager module QM within the dynamic video controller DVC, but such a specific delimitation may not be needed in other implementations. This request will then be responded by a message back from the application server AS, which message will comprise information with respect to the quality requirements needed by the application module VOR within the server AS for executing this particular application. In Fig. 1 a the request is sent to and answered by a repository module R within the applications module VOR in the application server AS, but other embodiments exist without such a dedicated repository module.

The quality requirement parameters are denoted as QR and, for object recognition applications, may comprise values for minimum resolution, generally corresponding to the minimum pixel density, the number of required frames in case of moving objects, a minimum required size of the to be recognized object, expressed in number of pixels in two dimensions, sharpness, expressed an an amplitude of the derivative of the brightness on a given window, color scale, expressed as a minimum number of color levels, entropy defined as a statistical measure of randomness, used to characterize texture in the image, etc.

These quality requirement parameters QR are in some embodiments extracted by QM from the message from the application server and forwarded to a spatial area delimiter module SAD, for receiving these parameters. The latter module is further adapted to check whether these quality requirement parameters QR comply with the available bandwidth in the network for the transmission of the video towards the application server and/or towards another mobile terminal e.g.for applications like telemedicine as will be shown when describing the embodiments of Figs. 5a-b.

It is to be remarked that for the embodiments as depicted in Figs. 5a-b the QR parameters can be preconfigured, and stored within the QM module itself. In that case they do not have to be requested anymore from an application server, and the QM has the functionality of a memory.

The SAD module thus receives the quality parameters QR from QM, and further receives bandwidth information BW from a bandwidth manager BWM within the first terminal MT1. Such a bandwidth manager can be a separate module, which may be shared by other functional blocks in the first terminal which are not relevant for this invention. This may e.g. be the case in mobile networks where there are frequent communications between MT1 and a base station, for receiving the latest status of the available bandwidth on the communications channel . Alternatively such a bandwidth manager BWM can also be incorporated within the dynamic video controller or in VAD itself.

In the embodiment of Fig. 1 a the bandwidth manager BWM is depicted as a separate module, which is able to communicate with e.g. a probe traffic receiver P deployed on the application server. This communication may comprise active measurement such as BART , being the abbreviation of Bandwidth Available in Real Time

In the embodiments of Figs 5a-b the mobile terminal will not transmit the adapted video to an application server, but instead to another, possibly predetermined mobile or other terminal of a communications network. In this case the bandwidth manager BWM is adapted to measure the bandwidth between MT1 and the other terminal. Similar techniques as with respect to the embodiment of Fig. 1a can be used, e.g. via a probe traffic receiver P in a base station or other network element between both terminals.

In case the bandwidth requirements BW are such that a high quality video can be transmitted over the network towards the application server or towards another mobile terminal, the dynamic video controller DVC will provide a control signal to another module STA of VAD. STA is a spatio temporal video quality adapter, and the DVC will inform STA in this case that the input video bitstream V does not have to be further modified and can just be forwarded to a video encoder E of MT1 . In order not to overload the drawings, this control signal is not shown in the Figures 1a-d and 5a-b.

If, on the other hand, the bandwidth requirements BW of the network are such that transmission of a high quality video, for enabling object recognition thereon, either manually or automatically, is not possible, the dynamic video controller DVC has to instruct the spatio temporal video quality adapter STA to adapt the video bitstream. This adaptation has to be such as to comply with the bandwidth requirements, while still enabling a service such as an automatic or manual object recognition service, to be performed on the detected object, or, in case the VOD is not present, on an object manually indicated on the images itself. To enable such an adaptation the DVC receives further information with respect to the areas in the frames of the video bitstream, in which the particular object to be recognized, is situated. This information may be either provided by the user him or herself, via a graphical user interface GUI, as depicted in the embodiment of Fig. 1a. The user then provides user information Ul, e.g. under the form of an indicated rectangle or area on a frame of the video bitstream, around the object which needs to be further recognized. The graphical user interface GUI will translate this information into an appropriate format understandable by the dynamic video controller. This information is denoted x,y on figs. 1 a and Figs 5a-b.

Alternatively, fully automated implementations may also rely on a video object tracking module VOT, coupled to the video object detector, as shown in the embodiment depicted in Fig. 1b. Such a video object tracking module VOT receives the DO information with respect to the object to be tracked from the VOD, and can identify and track therefrom this object which further needs to be recognized into detail, on successive frames. Therefore the video input bitstream V has to also be provided to VOT. In Fig. 1b an embodiment is shown where the VOD further provides the next frames to the VOT, but in other embodiments the video input bitstream can as well be directly provided to VOT from the camera or video input device itself. In all these embodiments spatial information denoted x,y with respect to the location of the object to be recognized in the subsequent images of the video is provided to the DVC. In most embodiments this spatial information is provided to the SAD, which is adapted to calculate therefrom, from the bandwidth limitation BW, and the quality requirements QR, the parameters for instructing the spatio-temporal video quality adapter how to adapt the frames of the video such as to comply with all these requirements. This adaptation by the STA may comprise reducing the resolution and color levels in all areas of the frames which are not related to the object to be recognized, such as to only keep high quality image parts in these regions of the frames where the object to be recognized is situated.

Depending on whether the object is moving or not, also the time resolution can be reduced, leading to e.g. less frames per seconds to be transmitted for frames not containing the object to be recognized. These control parameters are denoted VAP on figures 1a-d and 5a-b

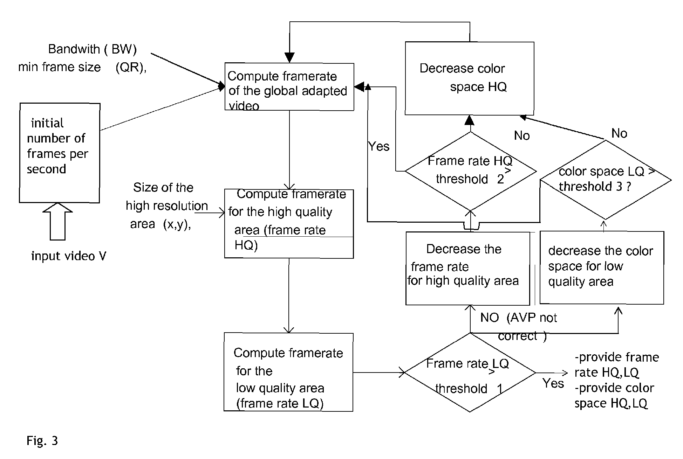

Fig. 3 shows a possible implementation of how these AVP parameters can be calculated. This embodiment uses as input the bandwidth BW, the size of the high resolution area x,y, and one QR parameter, in this embodiment being the minimum frame size needed for enabling a correct recognition. From the input video V also the initial number of frames per seconds is calculated . Then a first value for an AVP parameter is calculated, being an estimate of the frame rate of the global adapted video based on the initial number of frames per second, taking into account bandwidth limitations and minimum required frame size. Based on the size x,y of the area which needs to keep a high resolution for enabling object recognition, and based on this first estimate of the global frame rate of the adapted video, the frame rate of the high quality area is also calculated. This is used for determining the available frame rate for the low quality areas. In case this low resolution frame rate is still higher than a threshold 1, defining a minimum frame rate for the area of low resolution, this means that the initial estimated values for the AVP parameters are correct, and these will accordingly be output under the form of a frame rate for the high quality , abbreviated by HQ, area, the frame rate for the low quality, abbreviated by LQ, area, and initial values of the color space for these areas. These initial values can be the original values of the input video itself, or, in other embodiments, some minimum default values.

In case the available bandwidth for this lower resolution area is lower than what is available, as indicated by the first threshold, the frame rate for the high resolution area has to be adapted, or alternatively the color space for the low quality area may be adapted. In Fig. 3 both options are followed in parallel .In case the calculated frame rate for the high quality area is now too low, being lower than threshold 2, and in case the color space of the low quality area is too low as well, the color space of the high quality area is adapted. All adapted values will then be used again in a next iteration step for calculation of the global adapted frame rate, and the frame rate of the high quality and low quality parts, until the determined frame rate for the low quality part is acceptable. At this stage the thus provided parameters are output as AVP.

It is evident to a person skilled in the art that this was only an exemplary embodiment for calculation of the AVP parameters, and that a lot of other possibilities exist. In some embodiments also adapted values for the high resolution area will be calculated, in view of the QR requirements, and the available bandwidth etc.

Based on video quality information requested by the server side image processing algorithm and the spatial area delimitation, the dynamic video controller DVC is thus able to compute adapted values for frame rate for the different regions, color space encoding ,sub-image resolution, etc. These adapted video parameters are denoted AVP, and are provided by the dynamic video controller DVC to the spatio-temporal video quality adapter STA.

This spatio-temporal video quality adapter STA takes as input the these specified determined parameters provided in real-time by the dynamic video controller and adapts the input video bitstream accordingly.

The adaptation of the video V itself may be performed by computing, on each frame, a mask identifying the different areas to be adapted, these areas thus possibly being different as was indicated by the initial values of x and y, wherein the areas in which the quality can be lowered are adapted separate from the areas on which the quality can keep its original value. Thereaffer both parts are used for either merging or constructing new frames. This is the case in case the high quality area has a higher frame rate compared to the low quality area. This adapted video is denoted AV, and is next provided to an encoder, e.g. a traditional H. 264 MPEG encoder, which compresses and encapsulates the adapted video input bitstream. The output of the encoder is an encoded adapted video, denoted EAV on Fig 1 a.

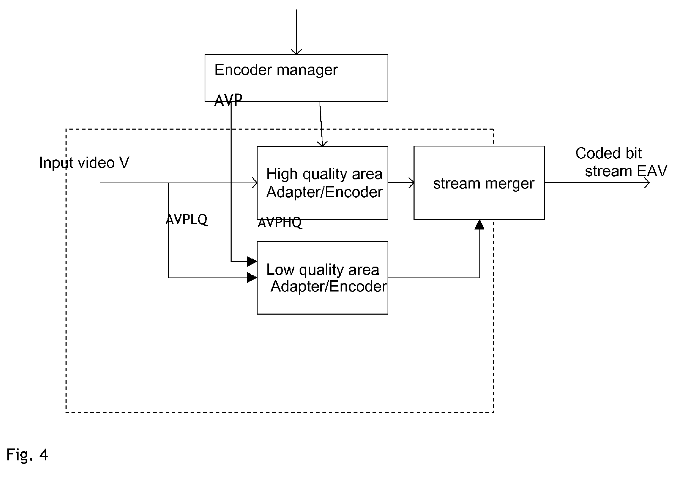

In an alternative embodiment, the encoding and the video adaptation can take place in a merged step , as shown in fig. 4. In this embodiment the STA and the encoder ENC operations are merged into a single device . This merged implementation used the obtained AVP parameters as input, and an encoder manager dispatches the AVP parameters for the low quality areas, denoted as AVPLQ, to the low quality area adapter/encoder, whereas the AVP parameters for the high quality areas , denoted AVPHQ, are dispatched to the high quality area adapter/encoder.

During the adaptation step an additional module, denoted video descriptor VD may also generate the corresponding metadata of the encoded video. These metadata includes information such as the starting byte of each frame, the length of frames, the localization of sub-image with a high quality . The VD module receives the DO metadata, generally describing the position of detected objects in each frame. The MD metadata further complete this information with encoding parameters such as resolution , number of color etc. This can be helpful during subsequent object recognition procedures as some of the object recognition algorithms are based on colors. In addition it may also be helpful to indicate to the object recognition module which is the actual region within the frame where to perform the object recognition. These actual coordinates can be different from the earlier determined coarse indications as present in the DO metadata. Such an additional VD module is shown in the embodiments of Figs. 1c-d.

In case these metadata , being denoted MD on figs 1c-d are generated, they can be added to the encoded adapted video during an additional encapsulation step, denoted ENC of Figs 1c-d. Such a video encapsulator puts in a container the encoded adapted video bitstream and the metadata bitstream and sends the data to a application server AS as shown in Figures 1c-d.

This application server may comprise a receiver device RD, comprising a decoder DEC for decoding the EAV or EEAV, and an application module such as a video object recognizer VOR in charge of recognizing complex objects or events on specific parts of the decoded adapted video stream AV.

At startup, such a video object recognizer VOR may describe its capabilities and register into a repository R its image quality requirements necessary to be able to recognize objects or events. These parameters specify for example the minimum size of the object, the minimum distance between the object and the image border, the chromatic requirements, the quality of the exposure, the sharpness, etc.

Upon receipt of an encoded adapted video file EEAV to which metadata were added during the final encapsulation step, the VOR can already use the metadata MD such as to restrict the recognition process to these parts of the frames as specified by the metadata. Alternatively, the video object recognizer can perform the whole recognition, including the detection process itself in case the metadata were not provided in the encoded adapted video stream EAV. This solution, as shown in Figs. 1a-b is therefore not to as optimal as the previously described one, of which the embodiments are shown in figs. 1c-d.

During the recognition process, features extracted from sub-frames can be compared to data of the database to identify objects. If objects are recognized, an object description is generated and can be used by different other applications not described in this document. This description can be further added to the adapted video bitstream, which can be re-encoded and forwarded to another user on another terminal MTR. The thus modified encoded video bitstream is denoted EAVM on Figs. 1a-b and EEAVM on Figs. 1c-d.

Figs 5a-b show embodiments of the method in which the receiver device is not part of an application server, but part of or consisting of another terminal MT2. Also in these embodiments the receiver device MT2 comprises a decoder DEC for decoding the received encoded adapted video stream EAV or the received encoded enhanced adapted video stream (not shown on Figs 5a-b) . For the example of telemedicine applications, the decoded video is sent to a display, on which a physician or specialist can see the adapted video and perform him/or herself an interpretation. In case this second terminal MT2, which can be, but necessarily has to be a mobile terminal, comprises an automatic object detection module, again this module may perform the automatic object detection in a similar way as was done in the application server, with reference to figures 1a-d.

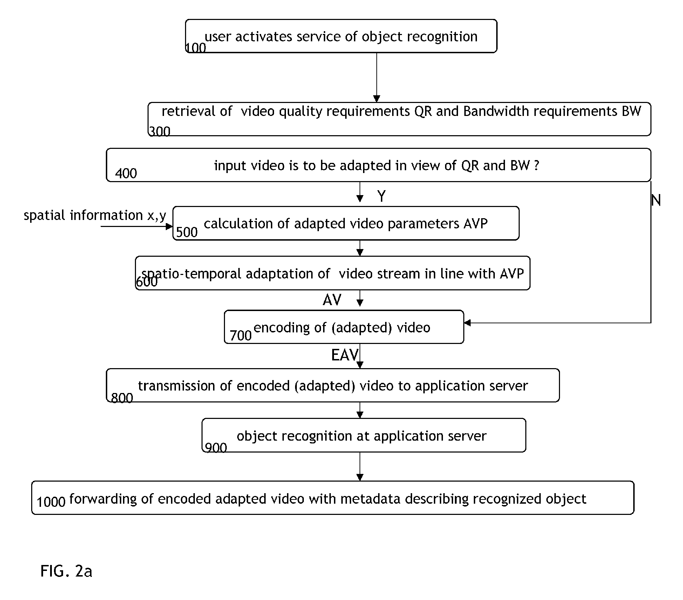

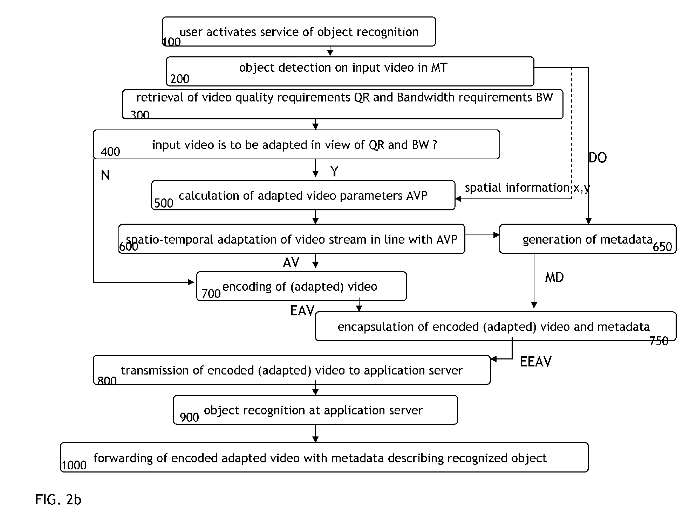

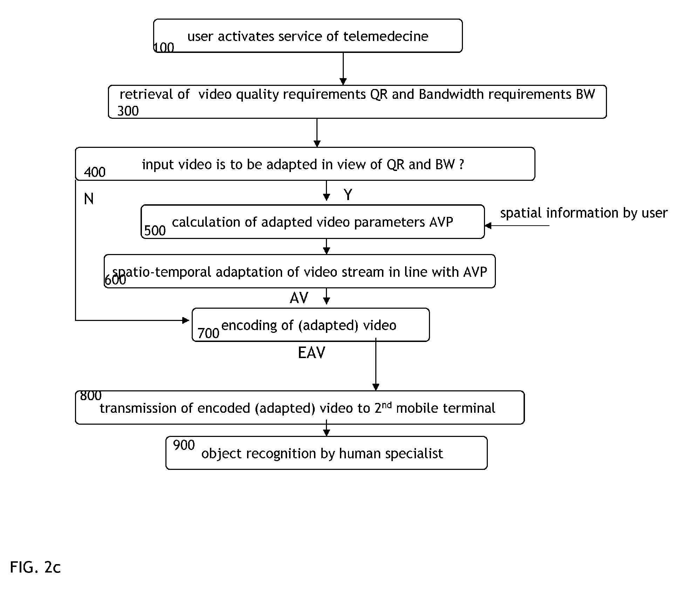

Figs 2a-b describe embodiments of the method including different steps which are performed on embodiments on Figures 1a-d, whereas Fig. 2c describes the steps in case the video is only adapted, for later manual interpretation, as is the case for the embodiments of Figs. 5a-b. Step 1000 is optional, as well as steps 200 and 650 and 750..

It is evident that for all these embodiments a smooth operation a good synchronisation between the video object detector, the dynamic video controller and the spatio-temporal video quality adapter is needed. A person skilled in the art is knowledgeable about the techniques for obtaining this, and in order to not overload the drawing, the control modules for achieving such a synchronization are not shown on the drawings.

It is also clear that the network used for transmission of the encoded adapted video bitstream from the first mobile terminal to the application server, and to another mobile terminal can be any type of telecommunications or data network. Such network or portions thereof may utilize any one or more different transmission media such as wired/RF cable, RF wireless and/or communications or networking protocols such as SONET, DOCSIS, IEEE std 802.3,802.11, 802.15, 802.16 , ATM, X.25, Frame Relay , 3GPP, 3GPP2, WAP, SIP, UDP, RTP, H.323, LTE etc

While the principles of the invention have been described above in connection with specific apparatus, it is to be clearly understood that this description is made only by way of example and not as a limitation on the scope of the invention, as defined in the appended claims.

## Claims

1. Method for adapting an input video stream (V) for facilitating a subsequent application to be performed upon receipt of the adapted video stream by a receiver, said method comprising the steps of determining control parameters (AVP) from quality requirement parameters (QR), bandwidth limitation parameters (BW) and spatial parameters(x,y), a step of performing a spatial-temporal adaptation of said input video stream (V) in accordance with said control parameters (AVP) to thereby generate said adapted video stream (AV) for provision to said receiver.

2. Method according to claim 1 wherein said spatial-temporal adaptation is performed by decreasing the resolution of areas of images of said input video stream which are not relevant with respect to said application , with respect to these areas of said images of said input video stream which are relevant to said application.

3. Method according to claim 1 or2 wherein said spatial-temporal adaptation is performed by decreasing the frame rate of the parts of images of said input video stream which are not relevant with respect to said application, with respect to these parts of the images of said input video stream which are relevant with respect to said application.

4. Method according to any of the previous claims, wherein said application comprises a step of object recognition.

5. Video adaptation device (VAD) for adapting an input video stream (V), said video adaptation device (VAD) being adapted to determine control parameters (AVP) for being used when performing a spatial-temporal adaptation of said input video stream (V) to thereby generate an adapted video stream (AV), said video adaptation device (VAD) being further adapted to calculate said control parameters (AVP) from quality requirement parameters (QR), bandwidth limitation parameters (BW) and spatial parameters (x,y) being provided to said video adaptation device (VAD).

6. Video Adaptation Device (VAD) according to claim 5, being further adapted to perform said spatial-temporal adaptation by decreasing the resolution of areas of images of said input video stream outside the regions defined by said spatial parameters (x,y).

7. Video Adaptation Device (VAD) according to claim 5 or 6 being further adapted to perform said spatial-temporal adaptation by decreasing the frame rate of parts of images of said input video stream outside the regions defined by said spatial parameters.

8. Video Adaptation Device (VAD) according to any of the previous claims 5-7, being further adapted to perform an object detection operation on said input video stream, thereby generating detected object features (DO).

9. Terminal (MT1; MT1') comprising a video adaptation device (VAD) in accordance to any of the previous claims 5-8, an encoder (E) for encoding the adapted video stream (AV), thereby providing an encoded adapted video stream (EAV) and means for further transmitting said encoded adapted video stream (EAV) towards a receiver device (AS; MT2) via a communications network .

10. Terminal (MT1') according to claims 8 and 9 further comprising video descriptor means (VD) coupled to said video adaptation device (VAD) and being adapted to generate metadata (MD) from said detected object features (DO) for provision to an encapsulation device (END) of said terminal (MT1), said encapsulation device (END) being adapted to generate enhanced encoded adapted video packets (EEAV) from said encoded adapted video stream (EAV) and said metadata(MD) for provision to said receiver device (AS).

11. Application server (AS) of a communications network, said application server (AS) being communicatively coupled to a terminal (MT1; MT1') in accordance with any of the previous claims 9-10, and comprising a decoder (DEC) for decoding said encoded adapted video stream (EAV) for provision to an application service (VOR) module of said application server, said application service module (VOR) being adapted to perform an application on said adapted video stream , and comprising means (R) for storing requirement parameters for said application service module and for providing said requirement parameters as said quality requirement parameters (QR) to said video adaptation device (VAD) of said terminal (MT1; MT1').

12. Application server (AS) according to claim 11 wherein said application service module comprises a video object recognition module (VOR) adapted to perform object recognition on said adapted video stream (AV).
